(19) Europäisches Patentamt
European Patent Office
Office européen des brevets

(11) Publication number: 0 161 104 A2

(12) # EUROPEAN PATENT APPLICATION

(21) Application number: 85303161.5

(22) Date of filing: 03.05.85

(51) Int. Cl.[4]: C 08 F 2/54
C 08 F 2/24, C 08 F 291/00

(30) Priority: 07.05.84 JP 89385/84
28.05.84 JP 106471/84

(43) Date of publication of application:
13.11.85 Bulletin 85/46

(84) Designated Contracting States:
CH DE FR GB IT LI NL SE

(71) Applicant: MITSUI TOATSU CHEMICALS, INCORPORATED
2-5 Kasumigaseki 3-chome
Chiyoda-Ku Tokyo 100(JP)

(72) Inventor: Itoh, Hiroshi
521, Kasamacho Totsuka-ku
Yokohama Kanagawa-ken(JP)

(72) Inventor: Nitta, Atsuhiko
634-1-154, Nobacho Kohnan-ku
Yokohama Kanagawa-ken(JP)

(72) Inventor: Tanaka, Tomio
8-14-2, Aoto Katsushika-ku
Tokyo(JP)

(72) Inventor: Kamio, Hideo
728-5, Sogabetsusho
Odawara Kanagawa-ken(JP)

(72) Inventor: Nagai, Katsutoshi
6-61, Shimohanazawa 2-chome
Yonezawa Yamagata-ken(JP)

(74) Representative: Harvey, David Gareth et al,
Graham Watt & Co. Riverhead
Sevenoaks Kent TN13 2BN(GB)

(54) **Polymer emulsions and process of preparing polymer emulsions.**

(57) A polymer emulsion is obtained by a process of homopolymerizing specific N-alkyl- or N-alkylene-substituted (meth)acrylamides, copolymerizing two or more of the said (meth)acrylamides, or copolymerizing at least one of the said (meth)acrylamides with one or more other copolymerizable monomers. The emulsion particles have temperature-dependent hydrophilicity or hydrophobicity, and can for example be comprised of a hydrophobic core with a surface coating of the thermosensitive N-alkyl- or N- alkylene-substituted (meth)acrylamides.

Croydon Printing Company Ltd.

"POLYMER EMULSIONS AND PROCESS OF PREPARING POLYMER EMULSIONS"

The present invention relates to polymer emulsions and process of preparing polymer emulsions.

More particularly, this invention relates to polymer emulsions of specific N-substituted acrylamide or N-substituted methacrylamide derivatives. These polymer emulsions have the properties that their hydrophobicity or hydrophilicity varies depending on their temperatures.

Polymer emulsions have a wide range of utility for example in or for the production of synthetic rubbers, paper-converting or conditioning agents and textile-processing agents and have conventionally been employed extensively. Attempts have been made in various fields to impart various functions to the surfaces of polymer particles in emulsions by making use of the large specific surface areas which the polymer particles have. These attempts have resulted in their development as diagnostic latexes in the field of diagnostic reagents. It may also be mentioned, as one of typical features of emulsion polymerization, that a polymer can be obtained with an extremely great molecular weight. Some polymerization techniques have also been developed by making use of this feature.

However, no successful techniques appear to exist as to surface modification of polymer latexes and to the application of emulsion polymerization processes for the production of water-soluble polymers.

As thermosensitive materials which develop cloud when heated as aqueous solutions, may for example be mentioned (1) specific acrylamide or methacrylamide derivatives [J. Macromol. Sci.-Chem., A2(8), 1441-1455 (1968)], (2) polymers containing ether bonds in their side chains [J. Colloid Interface Sci., 35, 77-84 (1971)], (3) polymers containing ether bonds in their backbone chains [J. Appln. Polymer Sci., 1, 56-62 (1959)], etc. They are all high molecular materials. When one attempts to use the thermosensitivity of one of the above-described polymers for practical applications, no problem arises at temperatures below the cloud point (the temperature at which its aqueous solution develops cloud when heated), including the stability of the aqueous solution. At or above the cloud point, the polymer is however caused to deposit. Since the resultant polymer deposits are very unstable, they agglomerate together into larger bodies, with the result that thermosensitivity, which is a characteristic feature of the polymer, cannot be fully utilized.

An object of this invention is to provide a polymer emulsion which remains hydrophobic and hence forms a polymer emulsion when heated and contains emulsified polymer particles, the hydrophilicity and hydrophobicity of which vary depending on temperature.

Another object of this invention is to provide a polymer emulsion in which the hydrophilicity and hydrophobicity of its emulsified particles are controlled by using a polymer of a hydrophobic monomer as a core material for the emulsified particles and then distributing a polymer of a (meth)acrylamide derivative on the surfaces of the emulsified particles.

Inter alia, this invention aims to provide a polymer emulsion which remains as the polymer emulsion at temperatures at or above the cloud point of its polymer, forms an aqueous solution at temperatures lower than the cloud point and turns into a highly-viscous aqueous polymer solution at still lower temperatures.

Other aims are to provide a stable polymer emulsion and to provide a polymer emulsion which is readily formable by using a monomer having its own cloud point.

An object of this invention is to provide a polymerization process which can produce with

ease a polymer of an extremely high molecular weight in accordance with the emulsion polymerization technique.

Desirably, the process can produce a polymer emulsion, the hydrophilicity and hydrophobicity of the emulsified particles of which vary depending on temperature. In particular, the process may produce a polymer emulsion which forms a highly-viscous aqueous polymer solution at low temperatures below the cloud point of its polymer, and a polymer emulsion which forms an aqueous gel at temperatures lower than the cloud point of its polymer.

Beneficially, a polymerization process according to this invention may provide a clean emulsion without the need for any surfactant.

According to the present invention, there is provided a polymer emulsion obtained by

(a) homopolymerizing a specific N-alkyl- or N-alkylene-substituted (meth)acrylamides represented, respectively, by the general formula (I):

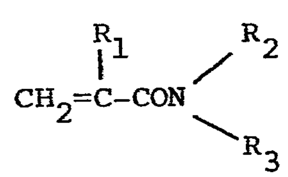

(I)

wherein $R_1$ means a hydrogen atom or methyl group and $R_3$ denotes an alkyl group having 1 - 3 carbon atoms when $R_2$ stands for a hydrogen atom or denotes a

methyl or ethyl group when $R_2$ stands for a methyl or ethyl group, and by the general formula (II):

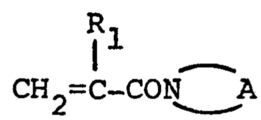

(II)

wherein $R_1$ means a hydrogen atom or methyl group, and A denotes $-(CH_2)_n-$, n being 4 to 6, or $-(CH_2)_2O-(CH_2)_2-$, (b) copolymerizing two or more of the said N-alkyl- and N-alkylene-substituted (meth)acrylamides, or (c) copolymerizing at least one of the said N-alkyl- and N-alkylene-substituted (meth)acrylamides with one or more copolymerizable monomers other than the N-alkyl- and N-alkylene-substituted (meth)acrylamides.

The invention also provides a process for preparing a polymer emulsion, which comprises effecting (a) the homopolymerization of one of specific N-alkyl- or N-alkylene-substituted (meth)acrylamides represented, respectively, by the formulas (I) and (II) defined above, (b) the copolymerization of two or more of the said N-alkyl- and N-alkylene-substituted (meth)acrylamides, or (c) the copolymerization between at least one of the said N-alkyl- and N-alkylene-substituted (meth)acrylamides and one or more copolymerizable monomers other than the N-alkyl- and N-alkylene-substituted (meth)acrylamides, in a liquid medium, in the presence or absence of a surfactant, and at a temperature at or above the cloud point of the polymer to be obtained.

The invention will now be described and explained in more detail in the description which follows, the description being given by way of non-limiting example of the invention.

This invention relates to a polymer emulsion obtained by homopolymerizing one of the specific N-alkyl- or N-alkylene-substituted (meth)acrylamides represented, respectively, by the general formulae (I) and (II) given above, or by copolymerizing two or more of the N-alkyl- and N-alkylene-substituted (meth)acrylamides, or by copolymerizing at least one of the N-alkyl- and N-alkylene-substituted (meth)acrylamides with one or more copolymerizable monomers other than the N-alkyl- and N-alkylene-substituted (meth)acrylamides. The invention also relates to a preparation process for such emulsion.

Among the N-alkyl- or N-alkylene-substituted acrylamides and N-alkyl or N-alkylene-substituted methacrylamides useful in the practice of this invention, the monomers represented by the general formula (I) in which $R_2$ means a hydrogen atom and $R_3$ denotes an alkyl group having 1 - 3 carbon atoms develop cloud in their aqueous solutions when heated and hence exhibit thermosensitivity (the temperatures at which cloud are developed will hereinafter be called "cloud points"). The cloud point varies depending on the type of each monomer [(meth)acrylamide derivative] but falls generally within the range of 0 - 90°C. The cloud point of each aqueous solution also varies depending on the concentration of the monomer in the aqueous solution. The cloud point generally decreases as the monomer concentration increases. Since an N-propyl substituted (meth)acrylamide has a high solubility in water, it is feasible to control the cloud point in a wide temperature range by using it. By cooling an aqueous solution which has developed cloud due to heating, it is possible to recover the clarity of the aqueous solution. This change can be repeated as often as desired. The (meth)acrylamide derivatives other than those mentioned above and still useful in the practice of this invention do not have cloud points *per se*.

The polymer which makes up the polymer emulsion of this invention is a polymer which is obtained by homopolymerizing one of the N-alkyl and N-alkylene-substituted (meth)acrylamides represented by the general formula (I) or (II) [hereinafter abbreviated as "N-substituted (meth)acrylamides"], copolymerizing two or more of the N-substituted (meth)acrylamides, or copolymerizing two or more of the N-substituted (meth)acrylamides with one or more copolymerizable monomers other than the N-substituted (meth)acrylamides and typically, but not essentially, has the property that, when heated in aqueous solution, it is progressively rendered hydrophobic to develop cloud in the aqueous solution. However, the polymers useful in the present invention are not necessarily limited to those having this property. It is only necessary for the polymer to have the property that its hydrophilicity and hydrophobicity are altered depending on temperature. In other words, the polymer has amphiphilic properties (which means that it has such wide solubility that it is both hydrophilic and hydrophobic as demonstrated by its solubility in both water and organic solvents such as benzene).

As examples of the above-described polymer and copolymer, may be mentioned polymers and copolymers of at least one of the following N-alkyl- or N-alkylene-substituted (meth)acrylamides.

N-n-Propylacrylamide;

N-n-Propylmethacrylamide;

N-Isopropylacrylamide;

N-Isopropylmethacrylamide;

N-Ethylacrylamide;

N,N-Diethylacrylamide;

N-Ethylmethacrylamide;

N,N-Dimethylacrylamide;

N,N-Dimethylmethacrylamide;

N-Methyl-N-ethylacrylamide;

N-Acryloylpyrrolidine;

N-Methacryloylpyrrolidine;

N-Acryloylpiperidine;

N-Methacryloylpiperidine;

N-Acryloylhexahydroazepine;

N-Methacryloylhexahydroazepine;

N-Acryloylmorpholine; and

N-Methacryloylmorpholine.

Among these (meth)acrylamides, those containing straight alkyl or alkylene groups substituted to their amido groups are preferred. For example, N-n-propylacrylamide is preferred to N-isopropylacrylamide.

In addition, one or more monomers selected from, for example, hydrophilic monomers, ionic monomers and

hydrophobic monomers may additionally be copolymerized in the above-described polymer and copolymer.

As exemplary hydrophilic monomers, may be mentioned acrylamide, methacrylamide, N-methylacrylamide, N-methylmethacrylamide, N-methylolacrylamide, N-methylolmethacrylamide, diacetoneacrylamide, methylenebisacrylamide, hydroxyethyl methacrylate, hydroxyethyl acrylate, hydroxypropyl methacrylate, hydroxypropyl acrylate, various methoxypolyethyleneglycol methacrylates, various methoxypolyethyleneglycol acrylates, various mono- or polyethyleneglycol dimethacrylates, various mono- or polyethyleneglycol diacrylates, N-vinyl-2-pyrrolidone, N-acryloyl alanine and N-methacryloyl alanine. Further, vinyl acetate or glycidyl methacrylate, for example, may be introduced by copolymerization, followed by hydrolysis to impart hydrophilicity.

Illustrative of ionic monomers are acids such as acrylic acid, methacrylic acid, vinylsulfonic acid, allylsulfonic acid, methallylsulfonic acid, styrenesulfonic acid, 2-acrylamido-2-phenylpropanesulfonic acid, and 2-acrylamido-2-methylpropanesulfonic acid and their salts; amines such as N,N-dimethylaminoethyl methacrylate, N,N-diethylaminoethyl methacrylate, N,N-dimethylaminoethyl acrylate, N,N-dimethylaminopropyl methacrylamide, and N,N-dimethylaminopropyl-

acrylamide and their salts. Further, it is also possible to impart ionic properties by introducing various acrylates, methacrylates, acrylamides, methacrylamides or acrylonitriles by copolymerization and then hydrolyzing the thus-introduced moieties.

As hydrophobic monomers, may for example be mentioned N-alkylacrylamide derivatives and N-alkylmethacrylamide derivatives such as N-n-butylacrylamide, N-n-butylmethacrylamide, n-tert-butylacrylamide, N-tert-butylmethacrylamide, N,N-di-n-propylacrylamide, N-n-hexylacrylamide, N-n-hexylmethacrylamide, N-n-octylacrylamide, N-n-octylmethacrylamide, N-tert-octylacrylamide, N-n-dodecylacrylamide and N-n-dodecylmethacrylamide; N,N-diglycidylacrylamide, N,N-diglycidylmethacrylamide, N-(ω-glycidoxyalkyl)acrylamide derivatives, and N-(ω-glycidoxyalkyl)methacrylamide derivatives such as N-(4-glycidoxybutyl)acrylamide, N-(4-glycidoxybutyl)methacrylamide, N-(5-glycidoxypentyl)acrylamide and N-(6-glycidoxyhexyl)acrylamide; acrylate derivatives and methacrylate derivatives such as ethyl acrylate, methyl methacrylate, butyl methacrylate, butyl acrylate, lauryl acrylate, 2-ethylhexyl methacrylate and glycidyl methacrylate; acrylonitrile; methacrylonitrile; vinyl acetate; vinyl chloride; vinylidene chloride; olefins

such as ethylene, propylene and butene; styrene; α-methylstyrene; butadiene; and isoprene.

Aqueous solutions of polymers or copolymers of the above-described N-substituted (meth)acrylamides may develop cloud when heated, since the polymers or copolymers are rendered hydrophobic by heating. When copolymerized with hydrophilic and/or ionic monomers, the cloud points are increased. However, the cloud points are decreased when copolymerized with hydrophobic monomers. Their hydrophilicity and hydrophobicity vary depending on temperature.

The above-described hydrophobic monomers, which are copolymerizable monomers other than the N-substituted (meth)acrylamides, are added to form the cores of particles to be emulsified. However, the hydrophilic monomers and ionic monomers are useful for modifying the surfaces of emulsified particles and stabilizing the emulsion *per se*.

Relative proportions between the N-substituted (meth)acrylamides represented by the general formula (I) or (II) and the above-described various other monomers will next be described.

The acceptable proportion of the hydrophilic, ionic or hydrophobic monomer to the N-substituted

acrylamide or methacrylamide may vary depending on the combination of the N-substituted (meth)acrylamide and the above-mentioned monomer. Although not sweepingly applicable to every combination, the hydrophilic and ionic monomers may generally be used in amounts of 60 wt.% or less and 30 wt.% or less, respectively.

In the polymer emulsion of this invention, the above-described N-substituted (meth)acrylamide can serve as a component making up the surfaces of particles in the emulsion. Since a hydrophobic monomer makes up the cores of emulsified particles especially when the N-substituted (meth)acrylamide is copolymerized with a hydrophobic monomer, the N-substituted (meth)acrylamide forms the surfaces of the emulsified particles automatically. In this case, the N-substituted (meth)acrylamide may amount to an extremely small proportion, i.e., 0.05% or more, preferably 0.5% or more, and more preferably 5% or more of the whole monomers. An emulsion can also be formed even when the N-substituted (meth)acrylamide is polymerized alone.

As a process for preparing the polymer emulsion of this invention by using one of the above-described monomers or a mixture of two or more of the monomers, either the usual preparation processes or the preparation process of this invention can be used.

Water is used as a reaction medium. Specifically, deionized water, distilled water, tap water, industrial water and the like may all be used. When a hydrophobic monomer is used in combination, the monomer may be converted into an emulsified state by using an ordinary surfactant such as an alkylsulfate, alkylarylsulfonate, fatty acid soap or the above-described ionic monomer as needed, followed by an emulsion polymerization. On the other hand, when the N-substituted (meth)acrylamide of this invention is used either singly or in combination with one or more hydrophilic or ionic monomers, the monomers are generally water-soluble and hence cannot be emulsified. However, the emulsification of the resulting polymer takes place and a polymer emulsion can be obtained, if the above-described surfactant or ionic monomer is dissolved in the presence of a polymerization initiator if necessary, the resultant solution is heated to a polymerization initiating temperature above the cloud point of the polymer and the above-described monomer is added to the polymerization.

Any polymerization initiator may be employed for the above polymerization so long as it is a water-soluble radical polymerization initiator such as a persulfate. Redox initiators may obviously be used. Specifically, may be mentioned, for example, ammonium

persulfate, potassium persulfate, hydrogen peroxide and tert-butyl peroxide, and as redox initiators usable in combination with the above-described oxidizing agents, may be mentioned sulfites, hydrogensulfites, salts of metals having lower ionic valences such as iron, copper and cobalt, organic amines such as aniline and reducing sugars such as ketose and aldose. Further, as azo compounds, may be used 2,2'-azobis-2-amidinopropane hydrochloride, 2,2'-azobis-2,4-dimethylvaleronitrile and 4,4'-azobis-4-cyanovaleric acid or their salts. Two or more of the above-described polymerization initiators may also be used in combination. The polymerization temperature may vary depending on the polymerization initiator to be used, but may generally be in the range of 0 - 100°C or preferably 5 - 90°C.

No particular limitation is imposed on the concentration of the polymer. However, it may generally range from 5 to 60%.

In practising the preparation process of the polymer emulsion of this invention, a variety of approaches may be employed including, for example, adding the polyermization initiator and the above monomer at once to effect the polymerization or adding the above monomer stepwise to prepare an emulsion, at a temperature at or above the cloud point of a polymer to be formed. Upon initiating the polymerization, the

N-substituted (meth)acrylamide may be placed in its entirety in the reactor. Alternatively, it may be added stepwise. When two or more monomers are copolymerized, they may be added at the same time, their mixture may be added stepwise, or they may be added one after another, each in its entirety or in portions. The above-described processes may be chosen depending principally on whether a homogeneous emulsion or a heterogeneous emulsion is intended.

The sizes of particles in the emulsion may be controlled, for example, in accordance with the types and amounts of the surfactant and ionic monomers which are to be employed. The particle sizes generally decrease as these materials are added in larger amounts.

The polymer emulsion prepared in the above manner contains at least a polymer of the N-substituted (meth)acrylamide, which polymer acts as a thermosensitive polymer capable of changing its properties to either hydrophilic or hydrophobic depending on temperature in an aqueous solution.

Specific examples of the process for the polymer emulsion are as follows:

(1) The hydrophilicity and hydrophobicity of the surfaces of emulsified particles may be controlled by changing the temperature of the emulsion when the

emulsified particles are formed of a copolymer between the N-substituted (meth)acrylamide and a hydrophobic monomer, because the emulsion may be formed by choosing one of the above-described preparation processes in such a way that the polymer of the hydrophobic monomer makes up the cores of the emulsified particles and the polymer of the N-substituted (meth)acrylamide is distributed on the surfaces of the emulsified particles.

By making use of the hydrophobic and hydrophilic property of the surfaces of the emulsified particles, it is therefore feasible to effect adsorption and desorption of various materials on the surfaces of the emulsified particles. This hydrophobic and hydrophilic property can impart more functions to the emulsion compared with conventional processes. In addition, it is also feasible to introduce highly-reactive glycidyl groups by copolymerizing an N-($\omega$-glycidoxyalkyl)(meth)-acrylamide derivative with a glycidyl-substituted monomer. The thus-prepared copolymer can immobilize a wide variety of compounds led by various proteins such as enzymes and antigens. The change of the surface property of emulsified particles in an aqueous emulsion to hydrophilicity or hydrophobicity as mentioned above can be observed by measuring temperature-dependent

variations in viscosity of the emulsion. The viscosity generally decreases as the temperature goes up.

(2) For the preparation of a water-soluble polymer, its polymerization is effected at a temperature at or above the cloud point of the polymer to be formed. An emulsion is formed at temperatures at or above the cloud point of the polymer, whereas the polymer becomes water-soluble at temperatures lower than its cloud point. Since the emulsion polymerization process allows a polymer having an extremely high molecular weight to be produced, a aqueous polymer solution having an extremely high degree of viscosity can be provided when the resultant emulsion is cooled to a temperature lower than the cloud point of the resultant polymer so as to render the polymer soluble in water. According to results which have been obtained to date, the emulsion polymerization process provides aqueous polymer solutions having viscosities at least 30 times greater than those of their corresponding polymer solutions obtained in accordance with the solution polymerization process. The cloud point of each polymer can be controlled by changing its composition. The cloud point generally increases when formed into a copolymer with a hydrophilic or ionic monomer but decreases when converted into a copolymer with a hydrophobic monomer.

(3) By copolymerizing with a hydrophobic monomer such as acrylonitrile or a crosslinkable monomer such as methylenebisacrylamide in the preparation process (2), it is also possible to prepare a polymer emulsion which forms an emulsion at or above the cloud point and an aqueous gel below the cloud point. By making use of these properties, aqueous gel-forming capacity may be imparted to fibers, non-woven fabrics, paper and film by maintaining the above polymer emulsion in its emulsion form at a temperature at or above the cloud point and impregnating or coating them with the polymer emulsion. Furthermore, the above polymer emulsion may be dried in the form of thin layers, thereby providing film which can form aqueous gel. The thus-formed aqueous gel has the temperature-sensitive characteristic property that it can absorb more water or moisture as the temperature drops and can release water or moisture when heated.

Therefore, emulsions prepared in the above manner are useful as agents for forming aqueous gel on the surfaces of various materials.

The hygroscopicity and shape-retaining capacity of aqueous gel formed from an emulsion prepared in the above manner can be controlled by making a suitable selection as to the types and amounts of the hydrophilic, hydrophobic or ionic monomers which are to be copolymerized as other monomers with the N-substituted (meth)acrylamides for the preparation of the emulsion.

(4) Since the present invention permits the formation of a stable emulsion without any need for a surfactant, provided that an ionic monomer such as sodium 2-acrylamido-2-phenylpropanesulfonate is used, it is possible to provide a clean emulsion which is free from contamination by a surfactant.

(5) When preparing a polymer emulsion in accordance with this invention by using a thermosensitive monomer which develops cloud when heated, a polymer emulsion can be formed using, as nuclei, resulting polymer particles which are caused to precipitate out at a temperature at or above the cloud point of the thermosensitive monomer. Correspondingly, the polymerization reaction can be facilitated and the polymer can be obtained with an extremely high molecular weight by its emulsion polymerization.

Among the above-described preparation processes of polymer emulsions of this invention, the process in which polymerization is effected at a temperature at or above the cloud point of the employed monomer or the resulting polymer is a novel process which makes use of the characteristic property of cloud point for the preparation of a polymer emulsion.

The polymer emulsions of this invention can be used as polymer emulsions useful in fields which require water-soluble polymers of very high molecular weights, for example, for the production of thickeners, high-molecular floculants and synthetic fibers, and also in the field of synthetic emulsions which require very high degrees of cleanness and performance, e.g., diagnostic latexes. They may also be used as surface modifiers for various materials, and, in particular, as agents for imparting aqueous gel forming capacity to various materials. In addition, they are also extremely useful for the modification of conventional polymer emulsions.

The present invention is further illustrated by the following non-limiting examples.

Referential Example 1:

An aqueous N-n-propylacrylamide solution having a concentration of 9.05% was placed in the cell of a spectrophotometer, and while gradually raising the temperature of the cell by circulating water through the spectrophotometer, the transmittance was measured at 420 nm. The mean temperature between the temperatures giving the maximum transmittance and minimum transmittance, which was taken as its cloud point from measured data, was 45°C. The maximum transmittance and minimum transmittance were 98.5% and

1.8%, respectively, in the above measurement. The solution was clouded when heated but recovered its colorless clearness when cooled.

Referential Examples 2 - 4:

The cloud points of three aqueous N-n-propylacrylamide solutions at the concentrations given in Table 1, were measured in the same manner as in Referential Example 1. Results are shown in Table 1. Each of the aqueous solutions was clouded when heated but recovered its colorless clearness when cooled.

Table 1

| Ref. Ex. | Conc. of aq. N-n-propylacrylamide soln. (%) | Cloud point (°C) |
|---|---|---|
| 2 | 11.8 | 40 |
| 3 | 13.6 | 20 |
| 4 | 17.0 | 10 |

Referential Example 5:

An aqueous N-isopropylacrylamide solution having a concentration of 18.2% was placed in a test tube having an inner diameter of 15 mm, in which a standard thermometer was inserted. The temperature of the solution was gradually raised in a temperature-controlled bath while the solutions was stirred by the thermometer. The solution started clouding at 38.5°C, and at 44.0°C was clouded so much that the mercury bulb of the thermometer was no longer visible. When

cooled, the clouded solution again turned colorless and clear. Separately, an aqueous N-isopropylacrylamide solution having a concentration of 14.6% started clouding at 48°C, and at 73°C was clouded so much that the mercury bulb of the thermometer was no longer visible. When cooled, the clouded solution again turned colorless and clear. Further, an aqueous N-n-propylmethacrylamide solution having a concentration of 5.7% began to develop cloud at 26°C. Even when heated further beyond the above temperature, it was not clouded to the degree that the mercury bulb of the thermometer became invisible. The clouded solution again turned colorless and clear when cooled.

Example 1:

Added to 25 ml of water were 3.5 g of N-n-propylacrylamide and 0.5 g of sodium 2-acrylamido-2-phenylpropanesulfonate (hereinafter abbreviated as "APPS-Na"). After purging the interior of the reactor with nitrogen, the liquid reaction mixture was heated to 40°C so as to cause emulsification. Thereafter, 1 ml of a 5% aqueous solution of potassium persulfate was added to the liquid reaction mixture to initiate polymerization. The polymerization was allowed to proceed for 6 hours. During this period, the polymerization proceeded while the resultant polymer solution remained in an emulsified state. It was thus

possible to stir the polymer solution thoroughly. When the polymer solution was cooled, it became clear and stirring was no longer feasible. The polymer emulsion was diluted to a concentration of 5% and the viscosity of the thus-diluted polymer solution was measured by a Brookfield viscometer. It was 100 cps (0.1 Pa s) at 50°C, but jumped to 6,460 cps (6.46 Pa s) when the temperature was lowered to 10°C.

Example 2:

An emulsion polymerization was conducted in exactly the same manner as in Example 1 except that 25 ml of water, 5 g of styrene, 1.0 g of N-n-propylacrylamide and 0.5 g of APPS-Na were used. The resulting polymer emulsion was stable even at room temperature. Its average particle size was 0.39 μm when measured in accordance with the simple turbidity method.

Example 3:

An emulsion polymerization was conducted in exactly the same manner as in Example 1 except that 44 ml of water, 4 g of N-n-butylacrylamide, 1 g of N-n-propylacrylamide and 0.5 g of APPS-Na were used. The resulting polymer emulsion was stable even at room temperature. Its average particle size was 0.66 μm when measured in accordance with the simple turbidity method.

Example 4:

Added to 58.3 g of water were 1.17 g of N-acrylolylpyrrolidine, 10.50 g of styrene and 0.02 g of sodium laurylsulfate. After purging the interior of the reactor with nitrogen, the liquid reaction mixture was heated to 70°C so as to emulsify the same. Thereafter, 1 ml of a 7% aqueous solution of potassium persulfate was added to the liquid reaction mixture to initiate polymerization. The polymerization was allowed to proceed for 7 hours. During this period, the polymerization proceeded while the resultant polymer solution remained in an emulsified state. It was thus possible to stir the polymer solution thoroughly. The average particle size of the emulsified particles in the resultant polymer emulsion was 1.08 μm when measured in accordance with the simple tubidity method. Using an emulsion obtained by diluting the polymer emulsion to a concentration of 10% with distilled water, its viscosity was measured at various temperatures by a Brookfield viscometer. It was found to be 2.75 cps (2.75 mPa s) at 40°C, 3.04 cps (3.04 mPa s) at 30°C, 3.67 cps (3.67 mPa s) at 20°C and 4.72 cps (4.72 mPa s) at 10°C.

Example 5:

An emulsion polymerization was conducted in exactly the same manner as in Example 4 except that

58.3 g of water, 1.17 g of N-acryloylpyrrolidine, 10.50 g of styrene and 0.47 g of APPS-Na were used. The average particle size of the resultant polymer emulsion was 0.27 µm when measured in the same manner as in Example 4. Further, the viscosity of an emulsion obtained by diluting the polymer emulsion to a concentration of 10% with distilled water was 0.90 cps (0.90 mPa s) at 70°C, 1.00 cps (1 mPa s) at 60°C, 1.18 cps (1.18 mPa s) at 50°C, 1.40 cps (1.40 mPa s) at 40°C, 1.70 cps (1.70 mPa s) at 30°C, 2.12 cps (2.12 mPa s) at 20°C and 2.75 cps (2.75 mPa s) at 10°C.

Example 6:

An emulsion polymerization was conducted in exactly the same manner as in Example 4 except that 58.3 g of water, 11.6 g of N-acryloylpyrrolidine and 0.47 g of APPS-Na were used. When the polymer emulsion was cooled, it became clear and its stirring was no longer feasible. Then, the polymer emulsion was diluted to a concentration of 10% with distilled water and the viscosity of the thus-diluted polymer solution was measured. It was 117 cps (0.117 Pa s) at 25°C.

Comparative Example 1:

Under a nitrogen stream, 45.0 g of distilled water and 5.0 g of N-acryloylpyrrolidine were added with stirring to a 100-ml, 4-necked, round-bottom flask. Thereafter, 0.5 g of ammonium persulfate and 0.23 g of sodium hydrogensulfite were added. They were

polymerized at 15 - 30°C for 4 hours, thereby obtaining a 10% aqueous solution of an N-acryloylpyrrolidine polymer. The viscosity of the aqueous solution was 3.5 cps (3.5 mPa s) when measured at 25°C.

Example 7:

Added to 1,700 g of water were 100 g of N-acryloylpyrrolidine and 3 g of APPS-Na. After purging the interior of the reactor with nitrogen gas, the contents were heated to 60°C. Thereafter, 0.6 g of potassium persulfate was added to the liquid reaction mixture to initiate polymerization. The polymerization was effected for 3 hours. The resulting polymer solution was progressively clouded and emulsified as the polymerization proceeded. Fifty grams of acrylonitrile were then added over 30 minutes, using a pump. After completion of the addition, the contents were allowed to react at 60°C for a further 3 hours. The polymer emulsion tended to remain in the emulsified state at temperatures at or above 50°C, but tended to change to aqueous gel at temperatures below 50°C. Its gel-forming tendency became more remarkable as the temperature dropped. The viscosity of the polymer emulsion was measured at various temperatures by means of a Brookfield viscometer. It was 13.0 poises (1.3 Pa s) at 60°C, 13.3 poises (1.33 Pa s) at 50°C, 120 poises (12 Pa s) at 40°C, 704 poises (70.4 Pa s) at 25°C, and 1,664 poises (166.4 Pa s) at 10°C.

Three non-woven fabrics and a vinyl plastic sheet cut into 10 cm x 10 cm squares, as shown in Table 2, were immersed as test pieces for 2 minutes in the polymer emulsion which had been heated to 60°C. After being fed between rolls to squeeze out water from the thus-immersed test pieces, the test pieces were dried at 110°C for 1 hour.

The test pieces impregnated and treated with the polymer emulsion (hereinafter called "treated test pieces") were immersed for one hour in water baths adjusted to 10°C, 25°C and 50°C. After being immersed for a predetermined time period, the test pieces were taken out of the water baths. After placing the test pieces between filter paper sheets to remove the accompanying water, their weights were determined.

The amounts of absorbed water were each calculated in accordance with an equation, which is given below, and are shown in Table 2. In addition, untreated test pieces which were not impregnated with the polymer emulsion were also tested in exactly the same manner as mentioned above. The amounts of water absorbed in the untreated test pieces are given as control test results in the bottom rows of each columns of the same table.

$$\text{Amount of absorbed water} = \frac{\text{Test piece weight (g) after immersion} - \text{Test piece weight (g) before immersion}}{\text{Test piece weight (g) before immersion in water}}$$

Table 2

| Test piece | Amount of absorbed water (g/g) | | |
|---|---|---|---|
| | 10°C | 25°C | 50°C |
| Non-woven rayon fabric (treated) | 4.5 | 4.2 | 3.2 |
| (untreated) | 0.6 | 0.5 | 0.6 |
| Non-woven polypropylene fabric (treated) | 3.1 | 2.8 | 2.4 |
| (untreated) | 0.5 | 0.3 | 0.3 |
| Non-woven polyester fabric (treated) | 5.4 | 5.0 | 4.2 |
| (untreated) | 1.0 | 1.1 | 0.9 |
| Agricultural vinyl plastic sheet (treated) | 0.5 | 0.4 | 0.2 |
| (untreated) | 0.0 | 0.0 | 0.0 |

Twenty four grams of the polymer emulsion were also spread on a Teflon sheet (12 cm x 12 cm square), followed by drying at 125°C for 2 hours.

After the drying, the polymer layer was peeled off the Teflon sheet to obtain a sheet having a thickness of 0.2 mm.

When this sheet was dipped in water, the sheet absorbed water into a water-containing gel film. The temperature of the water in which the sheet was immersed was changed to 10, 25 and 50°C and the amount of water absorbed per gram of the dry sheet was measured at each temperature. It was 69 g at 10°C, 45 g at 25°C and 38 g at 50°C.

Example 8:

Added to 170 g of water were 10 g of N-acryloylpyrrolidine and 0.3 g of APPS-Na. Under the same conditions as in Example 7, 0.06 g of potassium persulfate was added and a first-stage polymerization was carried out. Thereafter, using 5 g of vinyl acetate instead of the 50 g of acrylonitrile, a second-stage polymerization was effected under the same conditions as in Example 7. The viscosity of the resultant polymer emulsion was measured at various temperatures. It was 15.1 poises (1.51 Pa s) at 60°C, 14.7 poises (1.47 Pa s) at 50°C, 140.0 poises

(14 Pa s) at 40$^{\circ}$C, 741 poises (74.1 Pa s) at 25$^{\circ}$C, and 1,830 poises (183 Pa s) at 10$^{\circ}$C.

Claims:

1. A polymer emulsion obtained by (a) homopolymerizing a specific N-alkyl- or N-alkylene-substituted (meth)acrylamides represented, respectively, by the general formula (I):

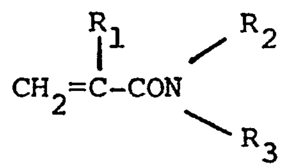

(I)

wherein $R_1$ means a hydrogen atom or methyl group, and $R_3$ denotes an alkyl group having 1 - 3 carbon atoms when $R_2$ stands for a hydrogen atom or denotes a methyl or ethyl group when $R_2$ stands for a methyl or ethyl group, and by the general formula (II):

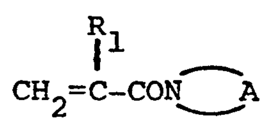

(II)

wherein $R_1$ means a hydrogen atom or methyl group, and A denotes $-(CH_2)_n-$, n being 4 to 6, or $-(CH_2)_2O-(CH_2)_2-$, (b) copolymerizing two or more of the said N-alkyl- and N-alkylene-substituted (meth)acrylamides, or (c) copolymerizing at least one of the said N-alkyl- and N-alkylene-substituted (meth)acrylamides with one or more copolymerizable monomers other than said N-alkyl- and N-alkylene-substituted (meth)acrylamides,

2. A polymer emulsion according to claim 1, wherein the copolymerizable monomers other than the N-alkyl- and N-alkylene-substituted (meth)acrylamides are selected from hydrophilic monomers, ionic monomers and hydrophobic monomers.

3. A polymer emulsion according to claim 1, wherein the polymer emulsion is obtained by homopolymerizing one of the N-alkyl-substituted (meth)acrylamides represented by the general formula (I) in which $R_2$ is a hydrogen atom, copolymerizing two or more of such N-alkyl-substituted (meth)acrylamides or copolymerizing one or more of such N-alkyl-substituted acrylamides with one or more copolymerizable monomers other than the N-alkyl-substituted (meth)acrylamides.

4. A polymer emulsion according to claim 1, wherein the polymer emulsion is obtained by homopolymerizing one of the N-alkylene-substituted (meth)acrylamides represented by the general formula (II), copolymerizing such N-alkylene-substituted (meth)-acrylamide with one or more of the N-alkyl- and said N-alkylene-substituted (meth)acrylamides or copolymerizing one or more of such N-alkylene-substituted acrylamides with one or more copolymerizable monomers other than the said N-alkyl- and N-alkylene-substituted (meth)acrylamides.

5. A polymer emulsion according to claim 2, wherein the particles of the emulsion are each formed of a core of hydrophobic monomer and the outer layers of the cores are formed of (a) the homopolymer of one of the said N-alkyl- and N-alkylene-substituted (meth)acrylamides, (b) a copolymer of two or more of the said N-alkyl- and N-alkylene-substituted (meth)-acrylamides or (c) a copolymer of one or more of the said N-alkyl- and N-alkylene-substituted (meth)acrylamides and one or more copolymerizable monomers other than the said N-alkyl- and N-alkylene-substituted (meth)acrylamides.

6. A polymer emulsion according to any one of claims 1 to 5, wherein the particles of the emulsion have surfaces that can be rendered hydrophobic when heated and hydrophilic when cooled.

7. A polymer emulsion according to claim 1 or 2, wherein the N-alkyl-substituted (meth)acrylamides represented by the formula (I) have cloud points.

8. A polymer emulsion according to claim 1 or claim 2, wherein said emulsion contains a polymer having a cloud point.

9. A polymer emulsion according to claim 8, wherein the polymer emulsion is converted to an aqueous high-viscosity polymer solution at a temperature below

the cloud point.

10. A polymer emulsion according to claim 8, wherein the polymer emulsion forms an aqueous gel at a temperature below the cloud point.

11. A process for preparing a polymer emulsion, which comprises effecting (a) the homopolymerization of a specific N-alkyl- or N-alkylene-substituted (meth)acrylamides represented, respectively, by the general formula (I):

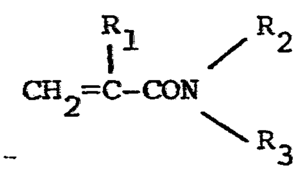 (I)

wherein $R_1$ means a hydrogen atom or methyl group, and $R_3$ denotes an alkyl group having 1 - 3 carbon atoms when $R_2$ stands for a hydrogen atom or denotes a methyl or ethyl group when $R_2$ stands for a methyl or ethyl group, and by the general formula (II):

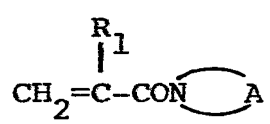 (II)

wherein $R_1$ means a hydrogen atom or methyl group, and A denotes $-(CH_2)_n-$, n being 4 to 6 or $-(CH_2)_2-O-(CH_2)_2-$, (b) the copolymerization of two or more of the said N-alkyl- and N-alkylene-substituted (meth)acrylamides, or (c) the copolymerization between

at least one of the said N-alkyl- and N-alkylene-substituted (meth)acrylamides and one or more copolymerizable monomers other than the said N-alkyl- and N-alkylene-substituted (meth)acrylamides, in a liquid medium e.g. water, optionally in the presence of a surfactant, and at a temperature at or above the cloud point of a polymer to be obtained.

12. A process according to claim 11, wherein the copolymerizable monomers other than the N-alkyl- and N-alkylene-substituted (meth)acrylamides are selected from hydrophilic monomers, ionic monomers and hydrophobic monomers.

13. A process according to claim 12, wherein at least one ionic monomer other than the N-alkyl- and N-alkylene-substituted (meth)acrylamide is used as the copolymerizable monomer.

14. A polymer emulsion incorporating a homopolymer or copolymer of an N-alkyl- or N-alkylene-substituted (meth)acrylamide represented by formula (I) or formula (II) of claim 1; $R_1$, $R_2$, $R_3$ and A having the meanings as ascribed thereto in claim 1.